(19) Europäisches Patentamt
European Patent Office
Office européen des brevets

(11) **EP 2 746 746 A2**

(12) **EUROPEAN PATENT APPLICATION**

(43) Date of publication:
**25.06.2014 Bulletin 2014/26**

(51) Int Cl.:
*G01N 17/00* [(2006.01)]     *G01N 27/04* [(2006.01)]

(21) Application number: **13198159.9**

(22) Date of filing: **18.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.12.2012 US 201213721718**

(71) Applicant: **General Electric Company Schenectady, New York 12345 (US)**

(72) Inventors:
• **Ekanayake, Sanji**
  **Atlanta, GA 30339 (US)**

• **Scipio, Alston Ilford**
  **Atlanta, GA 30339 (US)**
• **Dimascio, Paul Stephen**
  **Greenville, SC 29615 (US)**
• **Davis, Dale**
  **Greenville, SC 29615 (US)**

(74) Representative: **Cleary, Fidelma et al**
**GPO Europe**
**GE International Inc.**
**The Ark**
**201 Talgarth Road**
**Hammersmith**
**London W6 8BJ (GB)**

(54) **Systems and methods for measuring fouling in a turbine system**

(57)     Systems (120) and methods (350) for measuring fouling in a gas turbine compressor (102) include a conductivity resistance sensor (121) disposed in a compressor inlet mouth. The degree of compressor fouling is correlated to changes in resistance measured by the conductivity resistance sensor. Measurements of resistance changes are converted to an indicia of fouling and used to trigger cleaning of the compressor.

FIG. 1

**Description**

TECHNICAL FIELD

The subject matter disclosed herein generally relates to gas turbine compressor fouling detection and more particularly to systems and methods to measure compressor fouling using a conductivity/resistance sensor.

BACKGROUND

Turbine systems, including gas turbines, generally include a compressor section, one or more combustors, and a turbine section. Typically, the compressor section pressurizes inlet air, which is then turned in a direction or reverse-flowed to the combustors, where it is used to cool the combustor and also to provide air for the combustion process. In a multi-combustor turbine, the combustors are generally located in an annular array about the turbine and a transition duct connects the outlet end of each combustor with the inlet end of the turbine section to deliver the hot products of the combustion process to the turbine.

Components of turbine systems are subject to damage from fouling during its operation. Fouling is a buildup of material on components of the compressor. Fouling is caused by the adherence of particles to the airfoils and annulus surfaces. Particles that cause fouling are typically smaller than 2 to 10 $\mu$m. Fouling may lead to a modified aerodynamic profile, which reduces the efficiency of the compressor, and fouling may significantly impact the performance and heat-rate of the turbine system.

To maintain the compressor operating efficiently, industrial turbine system operators perform various maintenance actions, typically including online water washes, offline inspections, offline water washes, and filter maintenance. Fouling can be removed by offline inspections and offline water washing and slowed down by online water washing. Online water washing provides the advantage of cleaning the compressor without shutting down the turbine system. The online washing approach recovers turbine system efficiency when the operating schedule does not permit shutdown time so as to perform a more effective offline wash. Water nozzles of the system may be located in positions upstream or directly at the inlet to the compressor bellmouth casing. These nozzles create a spray mist of water droplets within a region of relatively low velocity air. When in operation, the spray mist is drawn through the bellmouth and into the compressor inlet by the negative pressure produced by the rotating compressor.

Understandably, disadvantages exist if these tasks are performed too frequently or infrequently. For example, excessive online washing can promote erosion, while insufficient online washing results in increased buildup of fouling agents on the compressor blades. Inevitably, offline inspections must be performed, requiring turbine shutdown and dismantlement that incur downtime. Though offline inspections are very costly events, failing to timely perform these inspections can result in damage to the turbine, such as from liberation of a compressor blade due to pitting corrosion. Consequently, turbine system operators rely on carefully scheduled offline inspections to monitor compressor performance and perform repairs to avert destructive events.

Currently there does not exist a reliable system for directly measuring compressor fouling.

BRIEF DESCRIPTION

The disclosure provides a solution to the problem of directly measuring compressor fouling.

In accordance with one exemplary non-limiting embodiment, the invention relates to a fouling measurement system. The fouling measurement system includes a conductivity sensor disposed in a compressor and a detector subsystem that generates resistance measurements from the conductivity sensor. The fouling measurement system also includes a processor that converts the resistance measurements to indicia of fouling.

In another embodiment, a turbine system is provided having a compressor and a compressor casing. The turbine system also includes a conductivity sensor disposed on the compressor casing and a subsystem for measuring changes in resistance of the conductivity sensor.

In another embodiment, a method for measuring fouling in a turbine system includes the steps of measuring resistance with a conductivity sensor disposed on a compressor casing in the turbine system to generate resistance measurements; applying a fouling parameter to the resistance measurements; and converting the resistance measurements to a fouling indicia.

BRIEF DESCRIPTION OF THE DRAWINGS

Other features and advantages of the present invention will be apparent from the following more detailed description of the preferred embodiment, taken in conjunction with the accompanying drawings which illustrate, by way of example, the principles of certain aspects of the invention.

Figure 1 is a schematic illustration of an exemplary turbine system with a fouling measurement system.

Figure 2 is a schematic illustration of an embodiment of a fouling sensor.

Figure 3 is a top view of an embodiment of the fouling sensor.

Figure 4 is an equivalent circuit diagram of the fouling sensor.

Figure 5 is an alternate embodiment of a fouling sensor.

Figure 6 is a detailed view of the area labeled Fig. 6 from Figure 5

Figure 7 is a cross section of the alternate embodiment of a fouling sensor taken along line A-A in Figure 5.

Figure 8 is a schematic diagram of an embodiment fouling measurement system.

Figure 9 is a flow diagram of a method for detecting compressor fouling.

DETAILED DESCRIPTION

The present disclosure provides for the measurement of compressor fouling. The measurement is accomplished through the use of a conductivity/resistance sensor disposed at the compressor inlet mouth and/or in between the compressor stages. Particles that cause fouling are deposited on the conductivity/resistance sensor, at the same rate as on the compressor airfoils, thereby decreasing the resistance. The degree of fouling is correlated to the decrease in resistance.

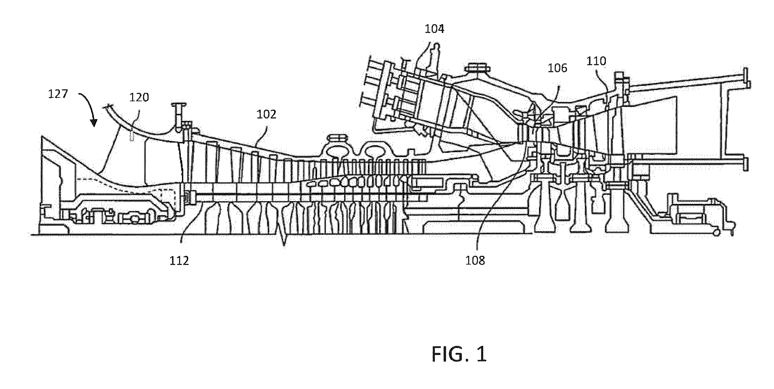

Figure 1 is a schematic upper-half cross-section illustration of an embodiment of a turbine system 100. Turbine system 100 includes a compressor assembly 102, a combustor assembly 104, a first stage turbine nozzle 106, a turbine nozzle cooling subsystem 108, a turbine assembly 110 and a common compressor/turbine shaft 112.

In operation, air flows through compressor assembly 102 and compressed air is supplied to combustor assembly 104, combustor assembly 104 being in flow communication with compressor assembly 102. Combustor assembly 104 ignites and combusts fuel, for example, natural gas and/or fuel oil, using air from compressor assembly 102 and generates a high temperature combustion gas stream. Combustor assembly 104 is also in flow communication with first stage turbine nozzle 106. Turbine nozzle cooling subsystem 108 facilitates cooling of first stage turbine nozzle 106. Turbine assembly 110 is rotatably coupled to and drives the common compressor/turbine shaft 112 that subsequently provides rotational power to compressor assembly 102, compressor assembly 102 is also rotatably coupled to common compressor/turbine shaft 112. In the exemplary embodiment, there may be one or more combustor assembly 104. In the following discussion, unless otherwise indicated, only one of each component will be discussed. A fouling measurement system 120 is attached to the compressor casing 125 and disposed so that at least a portion of the fouling measurement system 120 is exposed to the flow of air through the compressor inlet mouth 127, and/or in between the compressor stages in the compressor assembly 102.

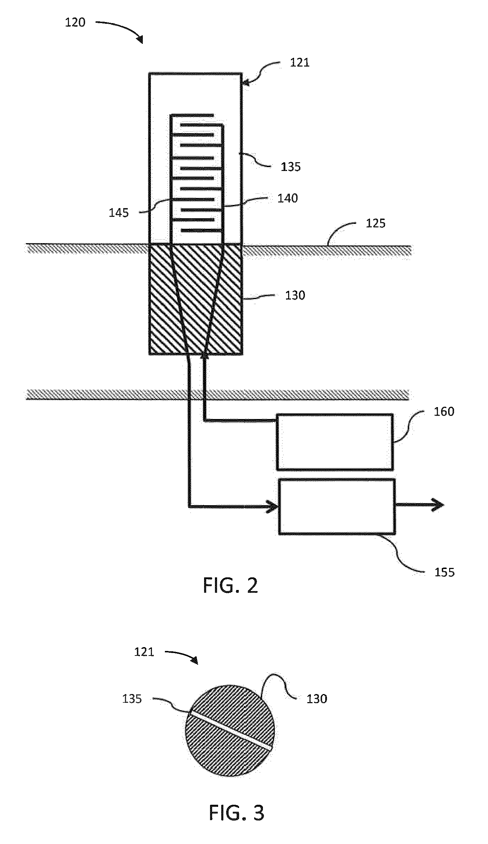

Illustrated in Figures 2 and 3 is an embodiment of a fouling measurement system 120. The fouling measurement system 120 includes a conductivity/resistance sensor 121 attached to the compressor casing 125. Conductivity/resistance sensor 121 is inexpensive and is of a type used in many common systems. Conductivity/resistance sensor 121 includes an attachment component 130 adapted to be connected to the compressor casing 125. The attachment component 130 also supports a flat nonconductive substrate 135 having a first electrode 140 and a second electrode 145. As illustrated in Figure 2, the first electrode 140 and the second electrode 145 are spaced apart and are connected only through the flat nonconductive substrate 135. The first electrode 140 and the second electrode 145 are connected to signal wires 150 which in turn are connected to a reader 155 and an alternating current source 160.

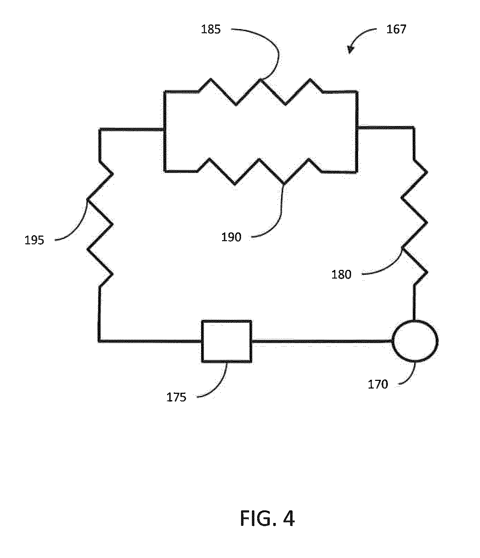

Illustrated in Figure 4 is the equivalent measurement circuit 167 for the conductivity/resistance sensor 121. The equivalent measurement circuit includes a power supply 170 and a detector 175. The circuit includes a signal wiring resistance 180 ($R_1$), a substrate resistance 185 ($R_{2a}$), and a surface resistance 190 ($R_{2b}$). The surface resistance 190 decreases with increased fouling. The total resistance 195 ($R_T$) may be calculated as follows:

$$R_T = R_1 + R_2,$$

where

$$R_2 = R_{2a}R_{2b}/(R_{2a} + R_{2b})$$

The fouling measurement system 120 may be disposed in the air flow stream at the compressor inlet mouth 127 of the compressor assembly 102 and/or in between compressor stages. Over time particles that cause fouling are deposited on the flat nonconductive substrate 135 thereby lowering the surface resistance 190 (R2b). The change in the total resistance 195 ($R_T$) is therefore a function of the degree of fouling in the compressor assembly 102. The electrical conductivity of the flat nonconductive substrate 135 and the particles deposited on the flat nonconductive substrate 135 is measured by measuring the voltage drop produced across the flat nonconductive substrate 135. The voltage drop is measured between the first electrode 140 and the second electrode 145 by passing an electrical current from the circuit portion through the flat nonconductive substrate 135 and the particles deposited on the flat nonconductive substrate 135.

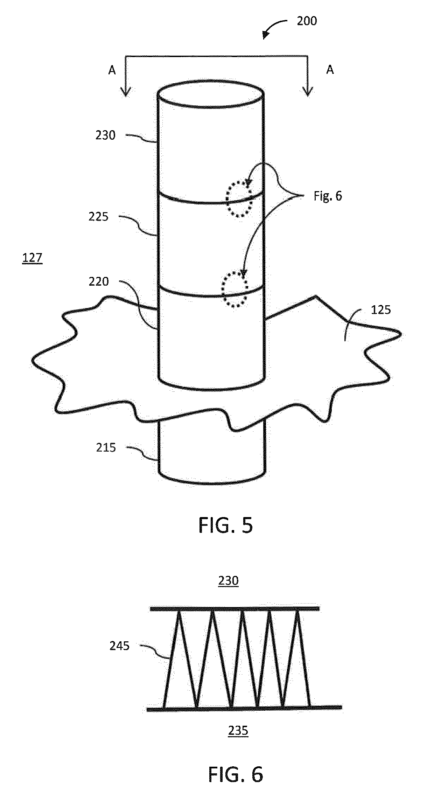

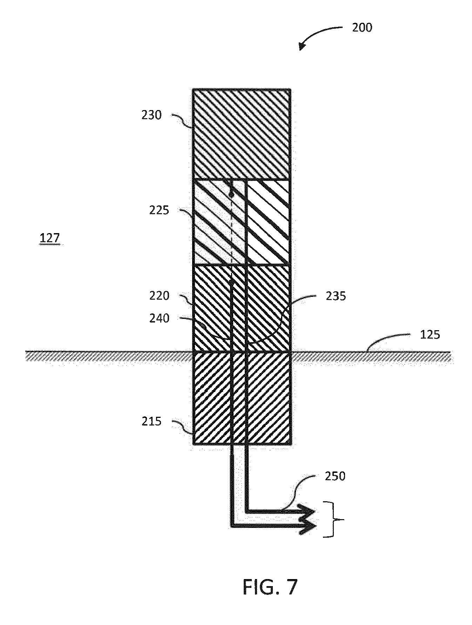

Illustrated in Figures 5, 6 and 7 is a cylindrical sensor 200, that may be attached to the compressor casing 125. Figure 5 is a perspective view of the cylindrical sensor 200 with the compressor casing 125 partially cut away. Figure 7 is a cross section of the cylindrical sensor 200 taken along the line A-A in Figure 5. The cylindrical sensor 200 is disposed in the compressor inlet mouth 127. The cylindrical sensor 200 includes an attachment component 215, a lower cap 220, a high resistance surface conductor 225, and an end cap 230. Disposed inside the cylindrical sensor 200 are a first electrode 235, and a second electrode 240. The interface between the end cap 230 and the high resistance surface conductor 225 may be an extended interface 245 to improve sensitivity to surface fouling (illustrated in Figure 6). This increased sensitivity is accomplished by increasing the relative areas between the first electrode 235 and the second electrode 240 exposed to fouling buildup on the high resistance surface 225. The first electrode 235 and the second electrode 240 are connected to signal wires 250. The equivalent circuit of the cylindrical sensor 200 is the same as the equivalent circuit of the conductivity/resistance sensor and the degree of fouling can be correlated to a decrease in the resistance measured across the high resistance surface conductor 225.

In operation, the cylindrical sensor 200 and the conductivity/resistance sensor 121 may be disposed in the compressor inlet mouth 127 or any latter stages. In the case of conductivity/resistance sensor 121, a current is provided across the flat nonconductive substrate 135 between the first electrode 140 and the second electrode 145. The resistance is measured by reader 165. Resistance or conductivity may be measured by determining the value of the current that must be passes through the cylindrical sensor 200 and the conductivity/resistance sensor 121 to maintain a predetermined value of voltage drop through the sensor. Over time, particles are deposited on the flat nonconductive substrate 135 which results in a decrease in resistance between the first electrode 140 and second electrode 145. The decrease in resistance is correlated to a degree of fouling. In the case of cylindrical sensor 200, a current is provided across the high resistance surface conductor 225 between the first electrode 235 and the second electrode 240. As particles adhere to the high resistance surface conductor 225, the overall resistance of the circuit is decreased.

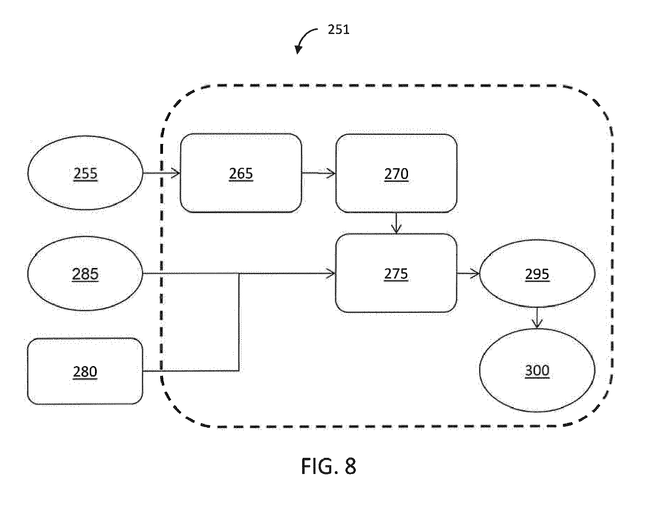

Figure 8 is a schematic diagram of a fouling measurement system 251. The fouling measurement system 251 includes one or more conductivity sensor(s) 255. The conductivity sensor(s) 255 provides a signal to a measured resistance module 265 and converts the signal to an output that can be processed by a processing module 270. The processing module 270 utilizes model based controls and Kalman filters to process measured resistance and provide an input to a characterization module 275. The model-based controls are derived from a model of a fouling measurement system 251. One approach to modeling is using a numerical process known as system identification. System identification involves acquiring data from a system and then numerically analyzing stimulus and response data to estimate the parameters of the system. The processing module 270 may utilize parameter identification techniques such as Kalman filtering, tracking filtering, regression mapping, neural mapping, inverse modeling techniques, or a combination thereof, to identify shifts in the data. The filtering may be performed by a modified Kalman filter, an extended Kalman filter, or other filtering algorithm, or alternatively, the filtering may be performed by or other forms of square (n-inputs, n-outputs) or non-square (n-input, m-outputs) regulators. The characterization module 275 characterizes fouling as a function of measured changes in conductivity or resistance. The characterization module 275 may receive a calibration input 280 that correlates resistance to the degree of fouling. Calibration may be made at a production facility or in the field. The characterization module 275 may also receive as input the time since last offline water wash 285. The output from characterization module 275 may be provided to a display module 295 such as a graphical user interface. An output 300 of the display module 295 may be a recommendation or triggering of a compressor wash.

The fouling measurement system 251 may be integrated into a larger control system such as a conventional General Electric Speedtronic™ Mark VI Turbine system Control System. The SpeedTronic™ controller monitors various sensors and other instruments associated with a turbine system. In addition to controlling certain turbine functions, such as fuel flow rate, the SpeedTronic™ controller generates data from its turbine sensors and presents that data for display to the turbine operator. The data may be displayed using software that generates data charts and other data presentations, such as the General Electric Cimplicity™ HMI software product.

The Speedtronic™ control system is a computer system that includes microprocessors that execute programs to control the operation of the turbine system using sensor inputs and instructions from human operators. The control system includes logic units, such as sample and hold, summation and difference units that may be implemented in software or by hardwire logic circuits. The commands generated by the control system processors cause actuators on the turbine system to, for example, adjust the fuel control system that supplies fuel to the combustion chamber, set the inlet guide vanes to the compressor, and adjust other control settings on the turbine system.

The controller may include computer processors and data storage that convert the sensor readings to data using various algorithms executed by the processors. The data generated by the algorithms are indicative of various operating conditions of the turbine system. The data may be presented on operator displays, such as a computer work station, that is electronically coupled to the operator display. The display and or controller may generate data displays and data printouts using software, such as the General Electric Cimplicity™ data monitoring and control software application.

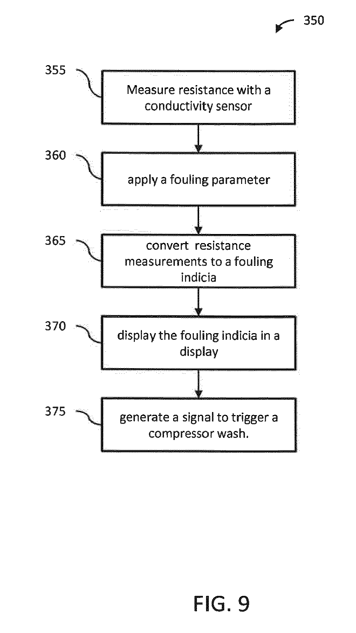

Illustrated in Figure 9 is a method 350 for measuring fouling in a turbine system in accordance with one embodiment. The method 350 is implemented by a fouling measurement system 251.

In step 355 the method 350 measures resistance with a conductivity sensor 255 (or an array of conductivity sensors) disposed on a casing in the turbine system.

In step 360 the method 350 determines changes in the resistance measurements.

In step 365 the method 350 applies a fouling parameter to the resistance measurements.

In step 370 the method 350 converts the resistance measurements to a fouling indicia.

In step 375 the method 350 displays the fouling indicia in a display module 295.

In step 380 the method 350 generates a signal to trigger a compressor wash.

Where the definition of terms departs from the commonly used meaning of the term, applicant intends to utilize the definitions provided below, unless specifically indicated.

The terminology used herein is for the purpose of describing particular embodiments only and is not intended to be limiting of the invention. Where the definition of terms departs from the commonly used meaning of the term, applicant intends to utilize the definitions provided herein, unless specifically indicated. The singular forms "a", "an" and "the" are intended to include the plural forms as well, unless the context clearly indicates otherwise. It will be understood that, although the terms first, second, etc., may be used to describe various elements, these elements should not be limited by these terms. These terms are only used to distinguish one element from another. The term "and/or" includes any, and all, combinations of one or more of the associated listed items. The phrases "coupled to" and "coupled with" contemplates direct or indirect coupling.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements.

Various aspects and embodiments of the present invention are defined by the following numbered clauses:

1. A fouling measurement system, comprising:

a conductivity sensor disposed in a compressor;
a detector subsystem that generates resistance measurements from the conductivity sensor; and
a processor that converts the resistance measurements to indicia of fouling.

2. The fouling measurement system of clause 1, wherein the conductivity sensor comprises a substrate and a pair of electrodes.

3. The fouling measurement system of clause 1 or 2, wherein the substrate and the pair of electrodes are exposed to airflow through the compressor.

4. The fouling measurement system of any preceding clause, wherein the substrate comprises a high resistance surface conductor.

5. The fouling measurement system of any preceding clause, wherein the conductivity sensor is attached to a compressor casing.

6. The fouling measurement system of any preceding clause, further comprising an additional one or more conductivity sensors arranged in an array.

7. The fouling measurement system of any preceding clause, wherein the conductivity sensor is disposed downstream from a water washer.

8. A method for measuring fouling in a turbine system comprising:

measuring resistance with a conductivity sensor disposed on a casing in the turbine system to generate resistance measurements;
applying a fouling parameter to the resistance measurements; and
converting the resistance measurements to a fouling indicia.

9. The method for measuring fouling in a turbine system of any preceding clause, further comprising determining changes in the resistance measurements.

10. The method for measuring fouling in a turbine system of any preceding clause, wherein measuring resistance measurements with the conductivity sensor comprises measuring resistance measurements with an array of conductivity sensors.

11. The method for measuring fouling in a turbine system of any preceding clause, further comprising displaying the fouling indicia in a display.

12. The method for measuring fouling in a turbine system of any preceding clause, further comprising generating a signal to trigger a compressor wash.

13. A turbine system, comprising:

a compressor;
a compressor casing;
a conductivity sensor disposed on the compressor casing
a subsystem for measuring changes in resistance of the conductivity sensor.

14. The turbine system of any preceding clause, further comprising a subsystem for converting changes in resistance to indicia of fouling.

15. The turbine system of any preceding clause, further comprising a display adapted to display the indicia of fouling.

16. The turbine system of any preceding clause, further comprising a processor that receives changes in resistance of the conductivity sensor and applies a calibration parameter to convert changes in resistance into an indicia of fouling.

17. The turbine system of any preceding clause, wherein the processor determines a time to trigger a compressor wash.

18. The turbine system of any preceding clause, wherein the conductivity sensor comprises a pair of electrodes disposed on a high resistance substrate.

19. The turbine system of any preceding clause, wherein the conductivity sensor is exposed to air flow through the compressor.

20. The turbine system of any preceding clause, further comprising an array of conductivity sensors disposed on the compressor casing.

**Claims**

1.  A fouling measurement system (120), comprising:

    a conductivity sensor (121) disposed in a compressor (102);
    a detector subsystem that generates resistance measurements from the conductivity sensor; and
    a processor that converts the resistance measurements to indicia of fouling.

2.  The fouling measurement system (120) of claim 1, wherein the conductivity sensor (121) comprises a substrate (135) and a pair of electrodes (140,145).

3.  The fouling measurement system (120) of claim 2, wherein the substrate and the pair of electrodes are exposed to airflow through the compressor (102).

4.  The fouling measurement system (120) of either of claim 2 or 3, wherein the substrate (135) comprises a high resistance surface conductor.

5.  The fouling measurement system (120) of any preceding claim, wherein the conductivity sensor (121) is attached to a compressor casing (125).

6.  The fouling measurement system (120) of any preceding claim, further comprising an additional one or more conductivity sensors arranged in an array.

7.  A method (350) for measuring fouling in a turbine system (100) comprising:

    measuring resistance (355) with a conductivity sensor (121) disposed on a casing (125) in the turbine system (100) to generate resistance measurements;
    applying a fouling parameter (360) to the resistance measurements; and
    converting the resistance measurements (365) to a fouling indicia.

8.  The method (350) for measuring fouling in a turbine system (100) of claim 7, further comprising determining changes in the resistance measurements.

9.  The method (350) for measuring fouling in a turbine system (100) of either of claim 7 or 8, wherein measuring resistance (355) measurements with the conductivity sensor (121) comprises measuring resistance measurements with an array of conductivity sensors.

10. The method (350) for measuring fouling in a turbine system (100) of any of claims 7 to 9, further comprising displaying (370) the fouling indicia in a display.

11. The method (350) for measuring fouling in a turbine system (100) of any of claims 7 to 10, further comprising generating a signal (375) to trigger a compressor wash.

12. A turbine system (100), comprising:

    a compressor (102);
    a compressor casing (125);
    a conductivity sensor (121) disposed on the compressor casing (125)
    a subsystem for measuring changes in resistance of the conductivity sensor.

13. The turbine system (100) of claim 12, further comprising a subsystem for converting changes in resistance to indicia of fouling.

**14.** The turbine system (100) of claim 12, further comprising a display adapted to display the indicia of fouling.

**15.** The turbine system (100) of any of claims 12 to 14, further comprising a processor that receives changes in resistance of the conductivity sensor and applies a calibration parameter to convert changes in resistance into an indicia of fouling.

EP 2 746 746 A2

FIG. 1

8

120

121

135

145 140

125

130

160

155

FIG. 2

121

135 130

FIG. 3

FIG. 4

FIG. 5

FIG. 6

FIG. 7

FIG. 8

350

355 — Measure resistance with a conductivity sensor

360 — apply a fouling parameter

365 — convert resistance measurements to a fouling indicia

370 — display the fouling indicia in a display

375 — generate a signal to trigger a compressor wash.

FIG. 9